# EUROPEAN PATENT SPECIFICATION

(11) **EP 1 788 681 B1**
(45) Date of publication and mention of the grant of the patent: **25.01.2012**
(21) Application number: 06124191.5
(22) Date of filing: 16.11.2006
(51) Int. Cl.: H02G 3/06

(54) **Engageable stretch of cable trays**
Einrastkabelrinnendehnung
Supports de câbles accouplables

(30) Priority: 18.11.2005 ES 200502541 U
(43) Date of publication of application: 23.05.2007
(73) Proprietor: Interflex, S.A., 08110 Montcada I Reixac (ES)
(72) Inventor: Canal Torrell, Jordi, 08110, Montcada I Reixac (ES)
(74) Representative: Ponti Sales, Adelaida

(56) References cited:
- EP-A- 0 578 459
- GB-A- 1 189 668
- GB-A- 2 349 514

## Description

The present invention refers to an engageable stretch of cable trays, the trays being formed by a plurality of lengths engaged to each other.

### BACKGROUND OF THE INVENTION

The cable trays are used essentially to distribute electrical cables and the like in installations, and they are formed by a plurality of stretches engaged to each other.

Each of these stretches is formed by a profile which defines a base and two lateral vertical walls provided at their upper part with a rim.

One of the engaging systems used is the one called plugged, which consists in the insertion of the depressed end of a stretch inside the natural end of the adjacent stretch. The presence of the rim protects the operators and the cables during its installation.

A drawback of this kind of joining of cable trays is the difficulty of its engagement, because these trays are suspended by supports generally in a high position. This inconvenience is because it is necessary precision to introduce the depressed part inside the adjacent stretch. Another drawback comes from the fact that the base of said stretches is not perfectly flat, but it is slightly curved. For this reason it is usual that when the operator tries to introduce the depressed part, it collides with the slightly arched base of the adjacent stretch.

To reduce these drawbacks some cuts are provided in the rims. Particularly, there are two known embodiments in which there is a cut. In one of these embodiments, this cut is at the natural part. In the other embodiment, the cut is at the depressed part, but it covers all its rim.

In the stretches which include this cut in the natural part, it is not possible to use this advantage when the stretch must be cut to a determined length.

Furthermore, the stretches comprising the cut in the depressed zone covering the whole rim have the drawback that the stretches are adapted but not engaged, lacking the reinforcement of the engagement and part of the walls lost in the cut.

### DESCRIPTION OF THE INVENTION

With the stretch of cable trays of the invention said drawbacks are solved, presenting other advantages that will be described.

The engageable stretch of cable trays of the present invention comprises a base and vertical walls provided with tubular rims at their upper part, said stretches comprising a depressed part which is inserted in an adjacent stretch for their engagement to each other, characterised in that said stretch comprises a cut at each of the vertical walls at said depressed part, said cuts covering the ends of said tubular rims.

According to a preferred embodiment, said cuts comprise a profile with a flat part and an inclined part, laterally seen.

Thanks to this feature, the engagement between adjacent stretches is more comfortable, because the flat part of the cut facilitates the entrance of the depressed end of one stretch inside the natural end of the adjacent stretch by a slight starting rotation, then a pressure to the base on the opposed wall and an sliding of the stretch to arrive to the end of its path.

Other advantages are that, if it is necessary, the stretches can be cut to obtain a desired length from the depressed part, because the end of said cut stretch will be also engageable; and that the insertion of the depressed tubular rim is inside the tubular rim of the natural end, reinforcing therefore the engagement.

The stretch of the present invention also comprises advantageously at each end a plurality of holes at each of the vertical walls and in the base to place fixation screws.

Also advantageously, the stretch of the present invention comprises a drawing at the base of the depressed end for protection when the cable slide.

### BRIEF DESCRIPTION OF THE DRAWINGS

For a better understanding of what has been disclosed some drawings are attached, in which, diagrammatically and only as a non-limitative example, a practical case of embodiment is shown.
Fig. 1 is a perspective view of a part of the stretch of the present invention with its depressed end;
Fig. 2 is a perspective view of two adjacent stretches according to the present invention; and
Fig. 3a-3d show the joining process of two engageable stretches in the different joining steps.

### DESCRIPTION OF A PREFERRED EMBODIMENT

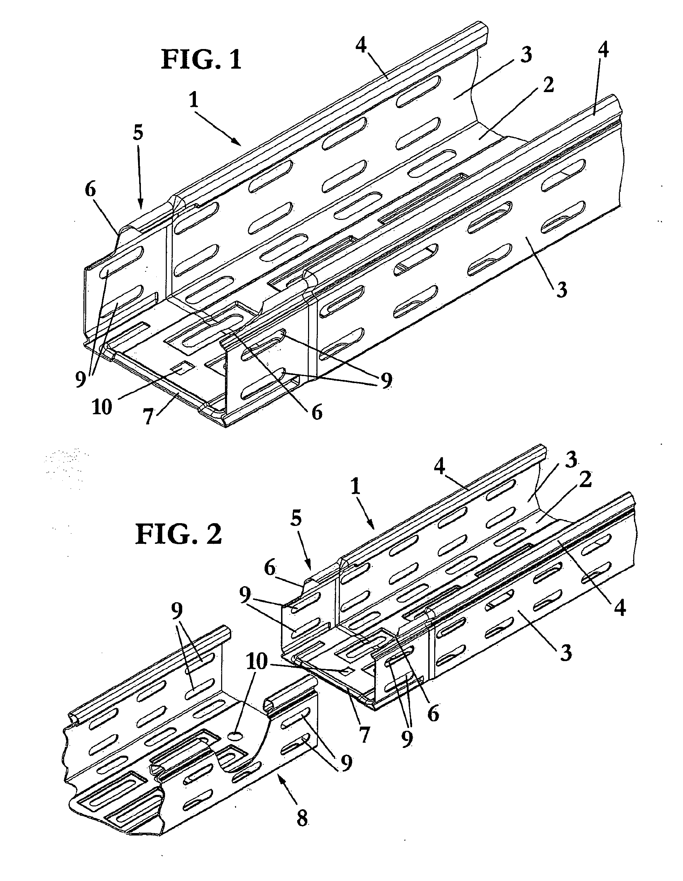

In Fig. 1 is shown a perspective view of an end of a stretch of a cable tray of the present invention, generally identified by the numeral reference 1.

This stretch end 1 is formed by a profile defining a base 2 and a pair of side walls 3 provided with a rim 4 formed from the profile itself at its upper part.

The stretch end 1 comprises a depressed zone, identified generally by reference numeral 5, which will be inserted in an end of the adjacent stretch to be engaged to each other.

According to the invention, the rims 4 comprise, at its depressed part 5, a cut 6 covering only a portion of the end of said cuts 4. This cut 6 presents a profile with a flat part and then an inclined part, as it would be seen in a side view, to facilitate the insertion of the depressed part 5 in the adjacent stretch.

The stretch 1 of the present invention also comprises at each end a plurality of holes 9, 10 at each of the vertical walls 3 and at the base 2 to place the fixation screws (not shown).

Furthermore, the stretch 1 of the present invention also comprises a drawing 7 at the base of the depressed end for protection when the cables are pulled.

In Fig. 2 is shown the stretch end 1 of Fig. 1 faced to another stretch end, identified generally by the numeral reference 8, which forms part of the cable tray, and it can include or not the features of the stretch of the present invention.

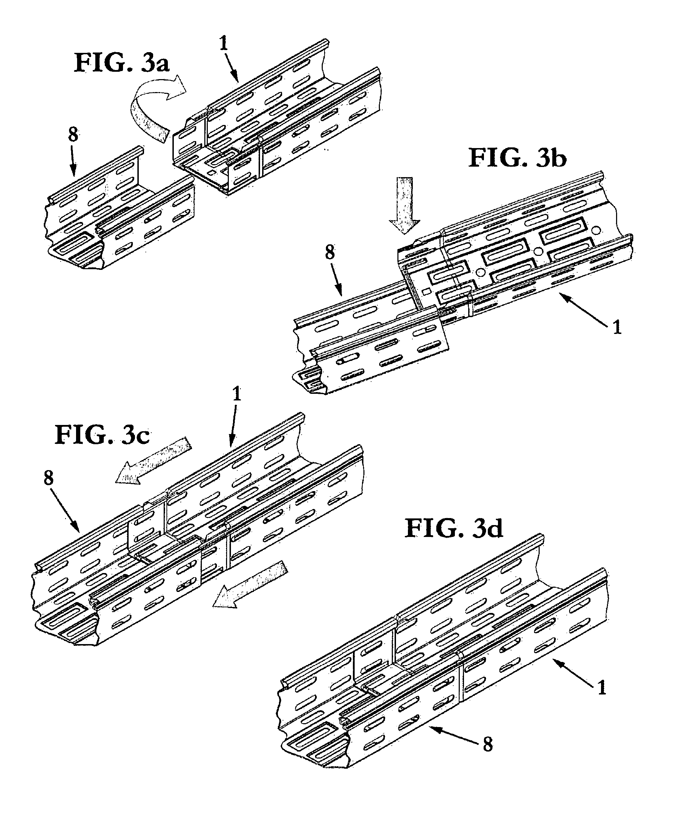

In Fig. 3a-3d is shown the process to engage two stretches to each other.

First, as it is shown by the arrow in Fig. 3a, the stretch 1 must be inserted by its depressed part and by a rotation about its longitudinal axis and a later pressure inside the space formed by the side walls and the base of the adjacent stretch 8 until it overlaps in a length which is the same of the flat cut of the edges, as it is shown in Fig. 3b.

Then, pressing the stretch 1 to the stretch 8 (Fig. 3c) it is obtained the desired engagement (Fig. 3d).

Even though reference is made to an specific embodiment of the invention, it is apparent for a person skilled in the art that the stretch of cable trays disclosed is susceptible of numerous variations and modifications, and that all the details disclosed can be substituted by other technically equivalent ones, without departing from the scope of protection defined by the attached claims.

## Claims

1. Engageable stretch of cable trays, the cable tray comprising a plurality of stretches engageable to each other, said stretch (1) comprising a base (2) and vertical walls (3) provided with tubular rims (4) at their upper part, said stretches (1) comprising a depressed part (5) which is inserted in an adjacent stretch for their engagement to each other, **characterised in that** said stretch (1) comprises a cut (6) at each of the vertical walls (3) at said depressed part (5), said cuts covering the ends of said tubular rims (4).

2. Stretch according to claim 1, **characterised in that** said cuts (6) comprise a profile with a flat part and an inclined part, laterally seen.

3. Stretch according to claim 1 or 2, **characterised in that** it comprises, at each end, a plurality of holes (9, 10) at each of the vertical walls (3) and at the base (2) to place fixation screws.

4. Stretch according to any of the previous claims, **characterised in that** it comprises a drawing (7) at the base of the depressed end for protection when the cables slide.

## Patentansprüche

1. Einrastabschnitt von Kabelrinnen, wobei die Kabelrinne eine Mehrzahl von Abschnitten aufweist, die ineinander einrasten können, der Abschnitt (1) eine Grundfläche (2) und vertikale Wände (3) aufweist, die in ihrem oberen Bereich mit rohrförmigen Rändern (4) ausgestattet sind, die Abschnitte (1) einen komprimierten Bereich (5) aufweisen, der in einen angrenzenden Abschnitt zum gegenseitigen Einrasten eingefügt wird, der Abschnitt einen Einschnitt (6) an jeder der vertikalen Wände (3) im komprimierten Bereich (5) aufweist, **dadurch gekennzeichnet, dass** die Einschnitte (6) nur einen Abschnitt der Enden der rohrförmigen Ränder (4) in ihrem komprimierten Bereich (5) abdecken.

2. Abschnitt nach Anspruch 1, **dadurch gekennzeichnet, dass** die Einschnitte (6), von der Seite gesehen, ein Profil mit einem flachen Abschnitt und einem geneigten Abschnitt aufweisen.

3. Abschnitt nach Anspruch 1 oder 2, **dadurch gekennzeichnet, dass** er an jedem Ende eine Mehrzahl von Löchern (9, 10) in den vertikalen Wänden (3) und in der Grundfläche (2) aufweist, um Befestigungsschrauben aufzunehmen.

4. Abschnitt nach einem der vorangehenden Ansprüche, **dadurch gekennzeichnet, dass** er zum Schutz, wenn die Kabel gleiten, einen Abzug (7) auf der Grundfläche des komprimierten Abschnitts aufweist.

## Revendications

1. Tronçon de chemin de câbles, pouvant être mis en prise, le chemin de câbles comprenant plusieurs tronçons pouvant être mis en prise les uns avec les autres, le tronçon (1) comprenant une base (2) et des parois verticales (3) munies de rebords tubulaires (4) à leur partie supérieure, les tronçons (1) comprenant une partie abaissée (5) qui est insérée dans un tronçon adjacent pour leur mise en prise l'un avec l'autre, le tronçon (1) comprenant une découpe (six) à chacune des parois verticales (3) au niveau de la partie abaissée (5), **caractérisé en ce que** les découpes (6) recouvrent, au niveau de la partie abaissée (5), uniquement une partie des extrémités des rebords tubulaires (4).

2. Tronçon selon la revendication 1, **caractérisé en ce que** les découpes (6) comprennent un profil ayant une partie plate et une partie inclinée, vu latéralement.

3. Tronçon selon la revendication 1 ou 2, **caractérisé en ce qu'**il comprend, à chaque extrémité, plusieurs trous (9, 10) dans chacune des parois verticales (3) et au niveau de la base (2) pour mettre des vis de fixation.

4. Tronçon selon l'une quelconque des revendications précédentes, **caractérisé en ce qu'**il comprend un emboutissage (7) au niveau de la base de l'extrémité abaissée, pour protection lorsque les câbles coulissent.
